Europäisches Patentamt

European Patent Office

Office européen des brevets

(19)

(11) Publication number:

**0 074 246**
**B1**

(12) **EUROPEAN PATENT SPECIFICATION**

(45) Date of publication of patent specification: **28.08.85**

(51) Int. Cl.⁴: **B 65 D 1/02, B 29 B 11/00**

(21) Application number: **82304599.2**

(22) Date of filing: **01.09.82**

(54) **Blow-moulded bottle-shaped container of biaxially oriented polyethylene terephthalate and piece to be blow-moulded into the same bottleshaped container.**

(30) Priority: **02.09.81 JP 130590/81**

(43) Date of publication of application:
**16.03.83 Bulletin 83/11**

(45) Publication of the grant of the patent:
**28.08.85 Bulletin 85/35**

(84) Designated Contracting States:
**CH DE FR GB IT LI NL**

(56) References cited:
**DE-A-2 746 951**
**DE-A-2 910 609**
**DE-A-3 002 189**
**FR-A-2 429 660**
**GB-A-1 303 599**
**GB-A-2 034 663**
**US-A-4 256 789**

(73) Proprietor: **Yoshino Kogyosho CO., LTD.**
**No 3-2-6, Ojima 3-chome, Koto-ku**
**Tokyo 136 (JP)**

(72) Inventor: **Hayashi, Yoshiaki**
**No. 3-2-6, Ojima Koto-ku**
**Tokyo (JP)**
Inventor: **Takada, Takuzo**
**No. 3-2-6, Ojima Koto-ku**
**Tokyo (JP)**

(74) Representative: **Heath, Derek James et al**
**Bromhead & Co. 30 Cursitor Street Chancery Lane**
**London EC4A 1LT (GB)**

Courier Press, Leamington Spa, England.

## Description

This invention relates to a preformed parison or equivalent part which is injection-moulded into a cylindrical shape with a bottom for the purpose of being blow-moulded into a hollow bottle-shaped container of a biaxially-orientated polyethylene terephthalate resin. The invention also relates to a hollow blow-moulded bottle-shaped container which has been produced from a parison of the above construction.

It has already been proposed in FR—A—2,429,660 to produce a hollow blow-moulded bottle-shaped container of a biaxially orientated polyethylene terephthalate resin from an injection-moulded parison or equivalent part, the neck portion of the parison and the container formed therefrom being crystallised by a heat treatment before the blow-moulding operation. The bottle-shaped container thus formed from the parison or equivalent part has a shoulder portion which is of gradually reducing thickness in comparison with the thickness of the neck portion. It is also known from GB—A—1,303,599 to provide a step on the inner peripheral surface of the boundary between the neck portion and the shoulder portion of the bottle-shaped container so that there is an abrupt reduction in thickness of the container wall at that boundary.

It is further known from DE—A—2,746,951 to produce a bottle-shaped container from a parison having a tapered shoulder between a neck portion and a main body portion.

The aim of the present invention is to provide an improved bottle-shaped container which is blow-moulded from a particular form of parison or equivalent part having a shoulder-forming portion of reduced thickness.

With this aim in view, the invention is directed to a preformed parison or equivalent primary part injection-moulded into a cylindrical shape with a bottom for the purpose of being blow-moulded into a hollow bottle-shaped container of a biaxially-orientated polyethylene terephthalate resin, the parison having a neck portion crystallised by a predetermined heat treatment, a shoulder-forming portion and a body-forming portion, characterised in that an annular recess or groove is formed on the outer peripheral surface of the shoulder-forming portion and/or on the inner peripheral surface thereof so that the wall thickness of the blow-moulded container is abruptly reduced at the boundary of the neck portion and the shoulder portion.

The invention also extends to a hollow bottle-shaped container which has been blow-moulded from a parison or equivalent part of the above construction, the said container being defined in claim 2 hereof.

Examples of parisons and bottles made therefrom in accordance with the invention are shown in the accompanying drawings, in which:

Figure 1 is a vertical section through the upper part of a bottle-shaped container in accordance with the invention;

Figure 2 is a vertical section through a parison to be blow-moulded into the bottle-shaped container of Figure 1; and

Figure 3 is a vertical section through an alternative form of parison in accordance with the invention.

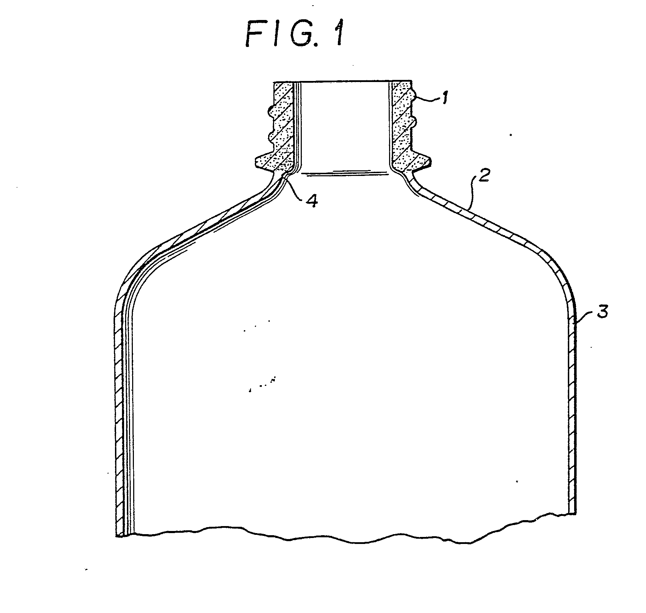

Figure 1 shows a hollow blow-moulded bottle-shaped container of a biaxially-orientated polyethylene terephthalate resin (PET) according to the present invention. It comprises a cylindrical body 3 with a bottom, an upwardly-tapered cylindrical wall-shaped shoulder portion 2 integrally formed on the upper end of the body 3, and a neck portion 1 on the upper end of the shoulder portion 2. The neck portion 1 of the container is crystallized, while the shoulder portion 2 of the container is so axially-orientated that the thickness of the wall of the shoulder portion 2 is substantially equal to that of the body 3 over the entire shoulder portion 2. A step 4 is formed on the inner peripheral surface of the boundary between the thicker neck portion 1 and the shoulder portion 2 to reduce abruptly the thickness of the wall at that boundary.

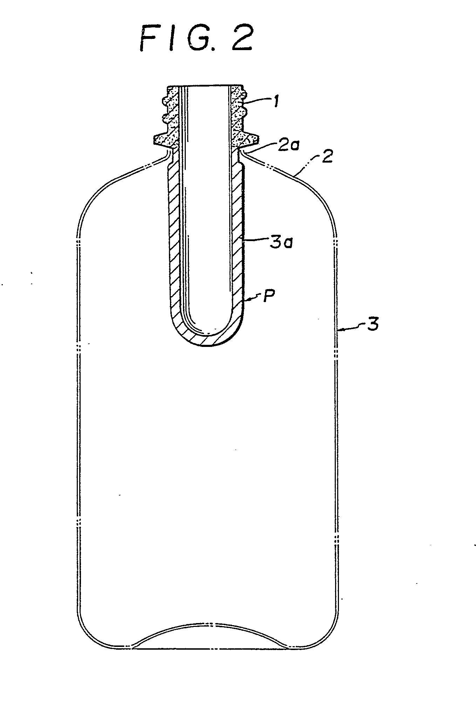

The bottle-shaped container shown in Figure 1 is blow-moulded from a preformed parison or equivalent primary part P as shown in Figure 2. The parison has a shoulder-forming portion 2a between the body-forming portion 3a and the neck portion 1, the neck portion 1 being crystallized by a predetermined heat treatment prior to the biaxial orientation blow-moulding of the parison P into the bottle-shaped container.

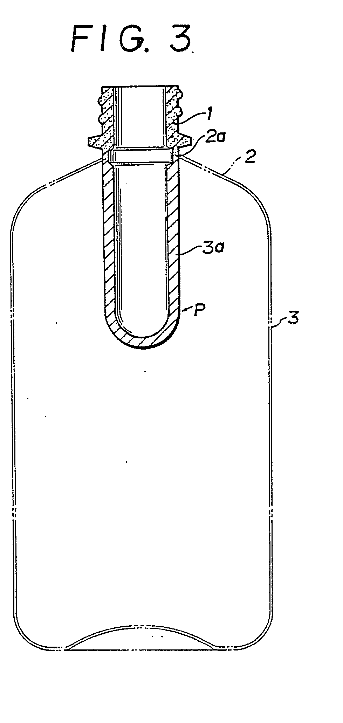

The thickness of the shoulder-forming portion 2a in the parison is reduced by an annular recess or groove which, in Figure 2, is formed on the outer peripheral surface of the shoulder-forming portion 2a. Alternatively, an annular recess or groove can be formed on the outer peripheral surface of the shoulder-forming portion 2a of the parison P as shown in Figure 3. It is also possible for annular recesses or grooves to be formed on both such surfaces.

When the part of the parison P directly below the crystallized neck portion 1 of the parison is reduced in thickness in advance by the above-mentioned recess or recesses, an orientation force applied during axial orientation of the parison is concentrated at the reduced-section part, thereby early orientating the said part of the parison during the blow-moulding operation. The orientation blow-moulding of the thinned part of the injection-moulded parison is therefore completed much earlier than when the parison is entirely orientated and blow-moulded. Accordingly, the axial orientation blow-moulding of the parison is subsequently continued for the other parts of the parison after the orientation blow-moulding of the thinned part has been completed.

As described above, the orientation blow-moulding is early concentrated at the part directly below the neck portion of the parison. However, the neck portion has already been heat-treated so as to be crystallized. Accordingly, the thus-crystallized neck portion is not orientated at all so that the intermediate part between the neck portion and the part directly below the neck portion is abruptly reduced in thickness, with the result that a step is formed at the boundary between the neck portion 1 and the shoulder portion 2.

Subsequent to, or simultaneously with, axial orientation blow-moulding of the parison, compressed air is introduced into the hollow parison to orientate the parison radially so as to completely biaxially-orientate the parison into a bottle-shaped container. The portion 2a to be formed into the shoulder portion 2 of the parison is also externally subjected to an orientation force. In this manner, the step 4 between the neck portion 1 and the shoulder portion 2 of the container is formed only on the inner peripheral surface of the bottle-shaped container.

Because the neck portion 1 is crystallized, the container has sufficient hardness at the neck portion 1 and is not subject to crazing due to the impregnation of alcohol in high density into the bottle-shaped container.

## Claims

1. A preformed parison or equivalent primary part (P) injection-moulded into a cylindrical shape with a bottom for the purpose of being blow-moulded into a hollow bottle-shaped container of a biaxially-orientated polyethylene terephthalate resin, the parison having a neck portion (1) crystallized by a predetermined heat treatment, a shoulder-forming portion (2a) and a body-forming portion (3a), characterised in that an annular recess or groove is formed on the outer peripheral surface of the shoulder-forming portion (2a) and/or on the inner peripheral surface thereof so that the wall thickness of the blow-moulded container is abruptly reduced at the boundary of the neck portion (1) and the shoulder portion (2).

2. A hollow blow-moulded bottle-shaped container of a biaxially-orientated polyethylene terephthalate resin comprising a cylindrical body (3) with a bottom, a tapered shoulder portion (2) integrally formed on the upper end of the body (3) and a crystallized neck portion (1) integrally formed on the upper end of the shoulder portion (2), characterised in that, for the purpose of abruptly reducing the thickness of the container wall at the boundary of the neck portion (1) and the shoulder portion (2) to substantially the wall-thickness of the body (3), the container is blow-moulded from a preformed injection-moulded parison or equivalent primary part (P) having a shoulder-forming portion (2a) provided with an annular recess or groove on its outer peripheral surface and/or on its inner peripheral surface.

## Revendications

1. Ebauche préformée ou pièce primaire équivalente (P) moulée par injection en une forme cylindrique, comportant un fond et destinée à être moulée par soufflage pour constituer un récipient en forme de bouteille en résine téréphtalate de polyéthylène à orientation biaxiale, l'ébauche comportant une partie de col (1) cristallisée par un traitement thermique prédéterminé, et une partie (2a) formant une épaule et une partie (3a) formant un corps, caractérisée en ce qu'un évidement ou une gorge annulaire est formé sur la surface périphérique extérieure de la partie (2a) formant épaule et/ou sur la surface périphérique intérieure de cette partie afin que l'épaisseur de la paroi du récipient moulé par soufflage soit réduite brusquement à la limite de la partie de col (1) et de la partie d'épaule (2).

2. Récipient en forme de bouteille moulé par soufflage en résine téréphtalate de polyéthylène à orientation biaxiale comprenant un corps cylindrique (3) ayant un fond, une partie d'épaule conique (2) réalisée d'une seule pièce avec l'extrémité supérieure du corps (3) et une partie de col cristallisée (1) réalisée d'une seule pièce sur l'extrémité supérieure de la partie d'épaule (2), caractérisé en ce que, pour réduire brusquement l'épaisseur de la paroi du récipient à la limite de la partie de col (1) et de la partie d'épaule (2) sensiblement à l'épaisseur de la paroi du corps (3), le récipient est moulé par soufflage à partir d'une ébauche préformée, moulée par injection, ou d'une pièce primaire équivalente (P) ayant une partie (2a) de formation d'épaule présentant un évidement ou une gorge annulaire à sa surface périphérique extérieure et/ou à sa surface périphérique intérieure.

## Patentansprüche

1. In eine zylindrische Form mit einem Boden spritzgegossener, vorgeformter Rohling oder ein äquivalentes primäres Teil (P), welcher in einen hohlen, flaschenförmigen Behälter aus biaxial orientiertem Polyethylenterephthalatharz blasgeformt wird und einen mittels vorbestimmter Wärmebehandlung auskristallisierten Halsabschnitt (1), einen Schulterformabschnitt (2a) und einen Körperformabschnitt (3a) aufweist, dadurch gekennzeichnet, daß eine ringförmige Ausnehmung oder Nut in der äußeren Umfangsfläche und/oder der inneren Umfangsfläche des Schulterformabschnittes (2a) ausgebildet ist, so daß die Wanddicke des blasgeformten Behälters an der Grenze zwischen Halsabschnitt (1) und Schulterabschnitt (2) abrupt reduziert ist.

2. Hohler, blasgeformter, flaschenförmiger Behälter aus biaxial orientiertem Polyethylenterephthalatharz mit einem zylindrischen Körper (3), welcher einen Boden, einen konischen Schulterabschnitt (2), welcher integriert mit dem oberen Ende des Körpers (3) ausgebildet ist, und einen integriert mit dem oberen Ende des Schulterabschnittes (2) ausgebildeten auskristallisierten Halsabschnitt (1) aufweist, dadurch gekennzeichnet, daß für den Zweck des abrupten Reduzierens der Wanddicke der Behälterwand im Grenzbereich zwischen dem Halsabschnitt (1) und dem Schulterabschnitt (2) auf im wesentlichen die Wanddicke des Körpers (3) der Behälter aus einem vorgeformten, spritzgegossenen Rohling oder einem äquivalenten Primärteil (2) blasgeformt wird, welcher einen Schulterformabschnitt (2a) aufweist, der an seiner äußeren Umfangsfläche und/oder seiner inneren Umfangsfläche mit einer Ringausnehmung oder Nut versehen ist.

# FIG. 1

# FIG. 2

# FIG. 3